# FASCICULE DE BREVET EUROPEEN

(11) **EP 2 569 148 B1**
(45) Date de publication et mention de la délivrance du brevet: **11.03.2015**
(21) Numéro de dépôt: 11725134.8
(22) Date de dépôt: 06.05.2011
(51) Int. Cl.: B29D 30/52, B29C 35/16, B29C 47/88, B29B 11/10

(54) **PROCÉDÉ DE FABRICATION D'UNE BANDE DE GOMME POUR PNEUMATIQUE COMPRENANT DES MOYENS DE REFROIDISSEMENT À EAU**
VERFAHREN ZUR HERSTELLUNG EINES KAUTSCHUKSTREIFENS FÜR EINEN REIFEN MIT WASSERKÜHLUNG
PROCESS FOR MANUFACTURING A RUBBER STRIP FOR A TYRE, COMPRISING WATER-COOLING MEANS

(30) Priorité: 11.05.2010 FR 1053661
(43) Date de publication de la demande: 20.03.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DUBOIS, Vincent, F-63040 Clermont-Ferrand Cedex 9 (FR); ROS, François, F-63040 Clermont-Ferrand Cedex 9fr (FR)
(74) Mandataire: Noel, Luminita
(86) Numéro de dépôt international: PCT/FR2011/051034
(87) Numéro de publication internationale: WO 2011/141668

(56) Documents cités:
- EP-A1- 1 815 961
- WO-A1-02/068169
- US-A- 1 682 876
- US-A- 4 247 506
- US-A- 4 696 779
- US-A- 5 326 508

## Description

L'invention concerne la fabrication des pneumatiques de véhicule.

Il est connu de mettre en forme une bande de gomme pour la fabrication d'un pneumatique de véhicule, au moyen d'une opération d'extrusion. La température de la gomme en sortie de l'extrudeuse est d'environ 140 C. Or le mélange constituant la gomme comprend notamment des produits favorisant la vulcanisation de l'élastomère, vulcanisation à haute température qui aura lieu plus tard. Il est donc nécessaire de refroidir sans délai la bande en sortie de l'extrudeuse afin de ne pas compromettre la vie thermique du matériau.

Selon le document US 4696779 - A, une bande de caoutchouc est refroidie directement après l'extrusion.

Le document WO 02/068169 - A concerne un système de refroidissement qui permet de refroidir une bande de caoutchouc utilisant de l'air soufflé.

Selon le document US 5326508 - A, on fait passer une bande en caoutchouc extrudée sur un tambour de refroidissement.

Selon les documents EP1815961 - A, US 4247506 - A et US 1682876- A, on fait passer une bande de roulement extrudée à travers un bain de refroidissement contenant de l'eau.

On refroidit la gomme par exemple en l'aspergeant d'eau. Mais le coeur de la bande met plus de temps à se refroidir que sa surface. Or, si l'eau ainsi déposée s'évapore, elle laisse à la surface de la bande des sels minéraux qui risquent d'altérer les propriétés d'adhérence de la gomme sur elle-même lors des opérations ultérieures d'assemblage des bandes de gomme pour la formation de l'ébauche crue du pneumatique. C'est la raison pour laquelle on chasse l'eau de refroidissement à distance de la bande de gomme au moyen de buses de soufflage d'air chaud qui évacuent l'eau des surfaces inférieure et supérieure de la bande, sans la faire s'évaporer.

On souhaite par ailleurs augmenter la productivité des lignes d'extrusion de gomme, ce qui implique d'accélérer le défilement de la bande de gomme sur la chaîne de fabrication et en particulier dans le refroidisseur. Or, à vitesse plus élevée, il est plus difficile d'évacuer l'eau de refroidissement de la surface de la bande. Il est également difficile d'évacuer toute l'eau lorsque la bande présente une surface striée.

Un but de l'invention est d'améliorer l'élimination de l'eau à la surface de la bande de gomme, notamment dans l'hypothèse où on souhaite augmenter la productivité de la ligne d'extrusion.

A cet effet, on prévoit, selon l'invention, un procédé de fabrication d'une bande de gomme pour pneumatique de véhicule, dans lequel :
- on forme une bande de gomme ;
- on refroidit la bande avec de l'eau froide;
- on réchauffe, depuis l'extérieur de la bande l'eau résiduelle se trouvant à la surface de la bande et/ou on remplace cette eau par de l'eau plus chaude ; et
- on élimine l'eau présente à la surface de la bande.

Ainsi, grâce à l'étape de chauffage et/ou de remplacement, on réduit la tension superficielle de l'eau déposée à la surface de la bande et on améliore le glissement des gouttes d'eau sur la surface du produit en vue de leur drainage vers l'extérieur de la bande. A cet égard, on rappelle que la tension superficielle de l'eau à 20° en -3 -1 contact avec l'air est de 73.10 N.m . Si l'eau est à 50°, sa tension superficielle en -3 -1 contact avec l'air est de 68.10 N.m . Si l'eau se trouve à 100°, sa tension -3 -1 superficielle en contact avec l'air est de 59.10 N.m . Cette tension se réduit donc à mesure que la température de l'eau s'accroît. On facilite donc son écoulement à la surface du produit. On peut alors évacuer l'eau avec plus d'efficacité, même en présence de stries, ou encore augmenter la vitesse de défilement de la bande sans compromettre l'évacuation de l'eau.

Avantageusement, après le refroidissement et avant l'étape de chauffage et/ou de remplacement, on chasse une partie de l'eau de refroidissement à distance de la bande.

On élimine ainsi l'eau froide présente sur la surface de la bande et on réduit ainsi la quantité d'énergie nécessaire pour réchauffer l'eau restant sur la bande ou de l'eau utilisée par les moyens de remplacement se trouvant en aval.

Dans un mode de mise en oeuvre, au cours de l'étape de chauffage et/ou de remplacement, on fait circuler la bande dans un bain d'eau dont la température est comprise entre 45 et 65 °C, de préférence entre 50 et 60 °C.

L'eau à la surface de la bande se trouve ainsi à une température compatible avec la vie thermique ultérieure du matériau.

Dans un autre mode de mise en oeuvre, au cours de l'étape de chauffage et/ou de remplacement, on projette de l'eau chaude sur la bande.

Dans un autre mode de mise en oeuvre, au cours de l'étape de chauffage et/ou de remplacement, on projette de la vapeur d'eau sur la bande.

De préférence, au cours de l'étape d'élimination de l'eau, on chasse au moins une partie de l'eau à distance de la bande. On entend ici par chasser le fait de forcer, à l'aide d'un moyen donné, la circulation de l'eau ou des gouttelettes d'eau vers l'extérieur de la surface de la bande.

Avantageusement, on achève cette étape d'élimination de l'eau en provoquant l'évaporation des traces d'eau demeurant encore à la surface de la bande

On observera ici que, plus l'efficacité des moyens de chasse est importante, plus la quantité d'eau résiduelle qui devra être éliminée par évaporation est faible, et par voie de conséquence plus les dépôts de sel minéraux à la surface de la bande sont réduits.

Avantageusement, on effectue au moins l'une des étapes de chasse et d'évaporation, et de préférence toutes, en soufflant de l'air sur la bande.

On prévoit également, selon l'invention, une installation de fabrication d'une bande de gomme pour pneumatique de véhicule, qui comprend :
- des moyens de formage d'une bande de gomme ;
- un refroidisseur à eau apte à refroidir la bande ;
- des moyens de chauffage de l'eau se trouvant à la surface de la bande et/ou des moyens pour remplacer cette eau par de l'eau plus chaude ; et
- des moyens d'élimination de l'eau.

D'autres caractéristiques et avantages de l'invention apparaîtront encore dans la description suivante de plusieurs modes de réalisation donnés à titre d'exemples non limitatifs en référence aux dessins annexés sur lesquels :
- la figure 1 est une vue schématique d'une installation de fabrication d'une bande de gomme, mettant en oeuvre un premier mode de réalisation du procédé de l'invention ;
- les figures 2 et 3 sont des vues partielles analogues à la figure 1 illustrant deux autres modes de réalisation de l'installation et du procédé ; et
- la figure 4 est une vue d'un pneumatique fabriqué au moyen de l'installation de la figure 1.

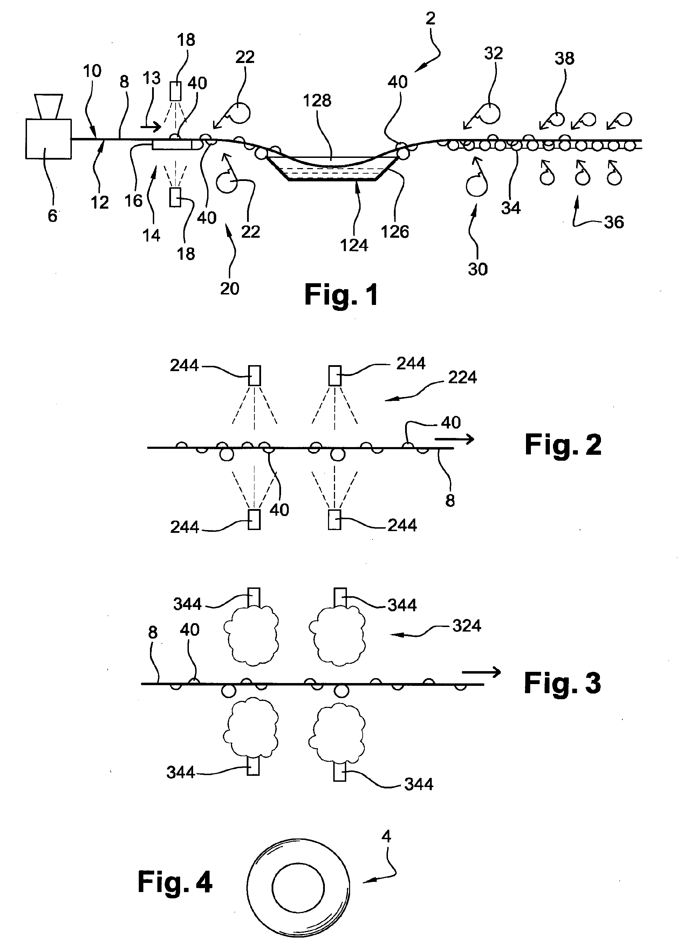

On a illustré à la figure 1 une installation conforme à un premier mode de réalisation de l'invention. L'installation 2 sert à la fabrication de bandes de gomme destinées à faire partie d'une ébauche crue de pneumatique en vue de la réalisation d'un pneumatique 4 tel que celui illustré à la figure 4. La bande comprend un mélange d'élastomères et d'autres produits et est par exemple destinée à former une bande de roulement du pneumatique. Les pneumatiques sont destinés notamment à des roues de véhicules de type léger, poids lourd ou génie civil.

L'installation 2 comprend une extrudeuse 6 apte à mettre en forme une bande de gomme 8 sortant par un orifice de l'extrudeuse. La bande a une forme profilée à section transversale sensiblement rectangulaire, les deux grandes faces de la bande, respectivement supérieure 10 et inférieure 12, étant planes, horizontales et parallèles l'une à l'autre.

Nous présenterons dans la suite les différents postes de l'installation 2 dans l'ordre où ils sont parcourus par la bande 8 et par référence au sens de défilement 13 de cette dernière.

L'installation comprend un refroidisseur 14 comportant un tapis 16 destiné à supporter la bande en défilement et, en regard de chaque face 10, 12 de la bande, une ou plusieurs buses 18 d'aspersion de la surface de la bande avec de l'eau froide.

L'installation comprend ensuite un poste de pré-essorage 20 comportant en regard de chaque face de la bande une ou plusieurs buses 22 de soufflage d'air disposées en série à la suite les unes des autres suivant la direction de défilement 13. Les buses ont pour fonction de chasser une partie au moins de l'eau de refroidissement résiduelle 40 se trouvant à la surface de la bande, sur ses deux faces 10, 12.

L'installation comprend ensuite un poste 124 de chauffage de l'eau de refroidissement. Dans ce mode de réalisation, le poste 124 comprend un bain formé par un bac 126 contenant de l'eau de chauffage 128 se trouvant à une température située entre 45 et 65 °C, et par exemple entre 50 et 60 °C. La température est en l'espèce de 55 °C. Le bain est agencé dans le trajet du défilement de la bande. Ce bain est maintenu à cette température par des moyens de chauffage ou de refroidissement thermostatés adaptés.

L'installation comprend ensuite un poste 30 d'essorage de la bande, comportant en regard de chaque face 10, 12 une ou plusieurs buses 32 de soufflage d'air disposées en série à la suite les unes des autres suivant la direction de défilement 13. Le poste comprend en outre une table 34 pour le support de la bande en défilement. Le poste 30 a pour fonction de chasser tout ou partie de l'eau du bain résiduelle se trouvant sur les deux faces de la bande pour commencer à sécher cette dernière.

L'installation comprend ensuite un poste d'évaporation 36 comportant lui aussi en regard de chaque face de la bande une ou plusieurs buses 38 disposées en série à la suite les unes des autres suivant la direction de défilement 13 et assurant un soufflage d'air préférentiellement chaud sur chacune des deux faces de la bande. Le poste 36 comprend aussi une table à rouleaux pour le support de la bande en défilement qui est en l'espèce commune avec celle du poste 34. Le poste 36 a pour but de sécher par évaporation les traces d'eau résiduelles se trouvant sur les faces de la bande, en particulier dans ses stries le cas échéant.

Le procédé de l'invention est mis en oeuvre au moyen de cette installation de la façon suivante.

La bande de gomme sort de l'extrudeuse 6. Elle passe dans le refroidisseur 14 où elle est aspergée d'eau froide sur ses deux faces, ce qui conduit à la présence de gouttes d'eau 40 sur ces dernières.

Une partie de cette eau se trouve chassée au poste de pré-essorage 20 mais de l'eau peut encore subsister sur chacune des faces. Le poste 20 a pour fonction de chasser en grande partie l'eau se trouvant sur la bande afin qu'elle ne refroidisse pas trop l'eau du bain du poste suivant.

La bande passe ensuite dans le bain 28 à l'issue duquel la surface de la bande porte maintenant des gouttes d'eau 40 se trouvant à une température plus chaude que les gouttes qu'elle portait avant l'entrée dans le bain.

La bande passe ensuite au poste de pré-essorage 30 où une grande partie de l'eau chaude qu'elle porte se trouve chassée.

Elle passe ensuite au poste 36 où l'étape d'élimination de l'eau de la surface de la bande s'achève par évaporation des gouttes d'eau résiduelles.

Grâce au poste 124, l'eau présente sur le produit au moment de son arrivée aux postes d'élimination de l'eau 30 et 36 est plus chaude qu'en sortie du poste de refroidissement 14. De ce fait, sa tension superficielle est réduite et son écoulement sur le produit sous l'effet des buses 32 se trouve facilité. En d'autres termes, on remplace l'eau froide du refroidisseur présente sur le produit par de l'eau plus chaude qui est donc plus facile à chasser. En l'espèce, les buses 22 du poste 20 et 32 du poste 30 ont un débit d'air plus élevé que celles 38 du poste 36 et/ou une pression moins élevée que ces dernières.

On a illustré à la figure 2 un deuxième mode de réalisation de l'installation dans lequel le poste de chauffage avec son bain est remplacé par un poste 224 comprenant de chaque côte de la bande une ou plusieurs buses 244 aptes à asperger avec de l'eau chaude les deux faces de la bande en défilement afin de remplacer l'eau se trouvant initialement à la surface de la bande avec de l'eau plus chaude ou d'ajouter de l'eau plus chaude sur cette surface. Les buses sont ici disposées en série à la suite les unes des autres suivant la direction de défilement 13, en regard de chaque face de la bande.

Dans un troisième mode de réalisation illustré à la figure 3, le poste de chauffage avec son bain est remplacé cette fois par un poste 324 qui comprend une ou plusieurs buses 344 aptes à projeter de la vapeur d'eau sur chacune des faces de la bande en défilement afin, pareillement, de remplacer l'eau résiduelle s'y trouvant encore par de l'eau plus chaude ou bien de réchauffer cette eau. Les buses sont ici encore disposées en série à la suite les unes des autres suivant la direction de défilement 13, en regard de chaque face de la bande.

Il s'agit dans tous les cas de faire en sorte que, avant l'élimination finale de l'eau résiduelle présente sur sa surface, le produit porte à sa surface de l'eau plus chaude qu'en sortie du poste de refroidissement, sans trop élever la température du produit en lui-même.

Bien entendu, on pourra apporter à l'invention de nombreuses modifications sans sortir du cadre de celle-ci.

Le poste de refroidissement 14 pourrait comprendre un bain d'eau de refroidissement traversé par la bande lors de son passage.

## Revendications

1. Procédé de fabrication d'une bande de gomme (8) pour pneumatique (4) de véhicule, **caractérisé en ce que** :
- on forme une bande de gomme (8) ;
- on refroidit la bande avec de l'eau ;
- on chauffe, depuis l'extérieur de la bande, l'eau (40) résiduelle se trouvant à la surface de la bande et/ou on remplace cette eau par de l'eau plus chaude ; et
- on élimine l'eau présente à la surface de la bande.

2. Procédé selon la revendication précédente dans lequel, après le refroidissement et avant l'étape de chauffage et/ou de remplacement, on chasse une partie de l'eau de refroidissement à distance de la bande (8).

3. Procédé selon l'une au moins des revendications précédentes dans lequel, au cours de l'étape de chauffage et/ou de remplacement, on fait circuler la bande (8) dans un bain d'eau chaude (128).

4. Procédé selon l'une au moins des revendications précédentes dans lequel, au cours de l'étape de chauffage et/ou de remplacement, on projette de l'eau chaude sur la bande (8).

5. Procédé selon l'une des revendications 3 ou 4 dans lequel l'eau du bain (128) ou l'eau projetée sur la bande présente une température comprise entre 45 et 65 °C, de préférence entre 50 et 60 °C.

6. Procédé selon l'une au moins des revendications précédentes dans lequel, au cours de l'étape de chauffage et/ou de remplacement, on projette de la vapeur d'eau sur la bande (8).

7. Procédé selon l'une au moins des revendications précédentes dans lequel, au cours de l'étape d'élimination de l'eau, on chasse au moins une partie de l'eau à distance de la bande (8).

8. Procédé selon l'une au moins des revendications précédentes dans lequel, on achève l'étape d'élimination de l'eau en provoquant l'évaporation des traces d'eau (40) demeurant encore à la surface de la bande.

9. Procédé selon l'une au moins des revendications 2, 7 ou 8 dans lequel on effectue au moins l'une des étapes de chasse et d'évaporation, et de préférence toutes, en soufflant de l'air sur la bande (8).

10. Installation de fabrication d'une bande de gomme (8) pour pneumatique (4) de véhicule **caractérisée en ce qu'**elle comprend :
- des moyens (6) de formage d'une bande de gomme (8) ;
- un refroidisseur à eau (14) apte à refroidir la bande ;
- des moyens (224; 324) de chauffage de l'eau se trouvant à la surface de la bande (8) et/ou des moyens (124; 224; 324) pour remplacer cette eau par de l'eau plus chaude ; et
- des moyens (30, 36) d'élimination de l'eau.

## Patentansprüche

1. Verfahren zur Fertigung eines Kautschukstreifens (8) für einen Fahrzeug-Luftreifen (4), **dadurch gekennzeichnet, dass**:
- ein Kautschukstreifen (8) geformt wird;
- der Streifen mit Wasser gekühlt wird;
- von außerhalb des Streifens das an der Oberfläche des Streifens befindliche Restwasser (40) erwärmt und/oder dieses Wasser durch wärmeres Wasser ersetzt wird; und
- das an der Oberfläche des Streifens vorhandene Wasser entfernt wird.

2. Verfahren nach dem vorhergehenden Anspruch, wobei nach dem Kühlen und vor dem Schritt des Erwärmens und/oder Ersetzens ein Teil des Kühlwassers in Abstand zum Streifen (8) vertrieben wird.

3. Verfahren nach mindestens einem der vorhergehenden Ansprüche, wobei während des Schritts des Erwärmens und/oder des Ersetzens der Streifen (8) durch ein Warmwasserbad (128) geführt wird.

4. Verfahren nach mindestens einem der vorhergehenden Ansprüche, wobei während des Schritts des Erwärmens und/oder des Ersetzens warmes Wasser auf den Streifen (8) gesprüht wird.

5. Verfahren nach einem der Ansprüche 3 oder 4, wobei das Wasser des Bads (128) oder das auf den Streifen gesprühte Wasser eine Temperatur zwischen 45 und 65°C, vorzugsweise zwischen 50 und 60°C hat.

6. Verfahren nach mindestens einem der vorhergehenden Ansprüche, wobei während des Schritts des Erwärmens und/oder des Ersetzens Wasserdampf auf den Streifen (8) gesprüht wird.

7. Verfahren nach mindestens einem der vorhergehenden Ansprüche, wobei während des Schritts des Entfernens des Wassers mindestens ein Teil des Wassers in Abstand zum Streifen (8) vertrieben wird.

8. Verfahren nach mindestens einem der vorhergehenden Ansprüche, wobei der Schritt des Entfernens des Wassers beendet wird, indem das Verdampfen der Wasserspuren (40), die noch an der Oberfläche des Streifens verbleiben, bewirkt wird.

9. Verfahren nach mindestens einem der Ansprüche 2, 7 oder 8, wobei mindestens einer der Schritte des Vertreibens und des Verdampfens, und vorzugsweise alle, ausgeführt werden, indem Luft auf den Streifen (8) geblasen wird.

10. Fertigungsanlage eines Kautschukstreifens (8) für einen Fahrzeug-Luftreifen (4), **dadurch gekennzeichnet, dass** sie enthält:
- Einrichtungen (6) zum Formen eines Kautschukstreifens (8);
- einen Wasserkühler (14), der den Streifen kühlen kann;
- Einrichtungen (224; 324) zum Erwärmen des an der Oberfläche des Streifens (8) befindlichen Wassers und/oder Einrichtungen (124; 224; 324), um dieses Wasser durch wärmeres Wasser zu ersetzen; und
- Einrichtungen (30, 36) zum Entfernen des Wassers.

## Claims

1. Method of manufacturing a strip (8) of rubber for vehicle tyres (4), **characterized in that**:
- a strip (8) of rubber is formed;
- said strip is cooled with water;
- residual water (40) on the surface of the strip is heated from the exterior of the strip and/or this water is replaced by hotter water; and
- the water present on the surface of the strip is eliminated.

2. Method according to the preceding claim wherein some of the cooling water is driven off at a distance from the strip (8) after cooling and before the heating and/or replacement step.

3. Method according to at least one of the preceding claims wherein the strip (8) is caused to circulate in a hot water bath (128) during the heating and/or replacement step.

4. Method according to at least one of the preceding claims wherein hot water is sprayed onto the tape (8) during the heating and/or replacement step.

5. Method according to either one of Claim 3 or 4 in which the water from the bath (128) or the water sprayed onto the strip has a temperature between 45 and 65°C, preferably between 50 and 60°C.

6. Method according to at least one of the preceding claims wherein steam is sprayed onto the strip (8) during the heating and/or replacement step.

7. Method according to at least one of the preceding claims wherein at least some of the water is driven off at a distance from the strip (8) during the water elimination step.

8. Method according to any one of the preceding claims wherein the water elimination step is completed by causing evaporation of the traces (40) of water still remaining on the surface of the strip.

9. Method according to at least one of Claims 2, 7 or 8 in which at least one of the driving off and evaporation steps, and preferably all of them, is effected by blowing air onto the strip (8).

10. Installation for manufacturing a strip (8) of rubber for vehicle tyres (4), **characterized in that** it includes:
- means (6) for forming a strip (8) of rubber;
- a water cooler (14) adapted to cool the strip;
- means (224; 324) for heating the water on the surface of the strip (8) and/or means (124; 224; 324) for replacing this water with hotter water; and
- means (30, 36) for eliminating the water.
